# EUROPEAN PATENT SPECIFICATION

(11) **EP 3 187 832 B1**
(45) Date of publication and mention of the grant of the patent: **14.10.2020**
(21) Application number: 15835725.1
(22) Date of filing: 28.01.2015
(51) Int. Cl.: G01D 5/14

(54) **MAGNETIC POSITION DETECTION DEVICE**
MAGNETPOSITIONSDETEKTIONSVORRICHTUNG
DISPOSITIF DE DÉTECTION DE POSITION MAGNÉTIQUE

(30) Priority: 26.08.2014 JP 2014171072
(43) Date of publication of application: 05.07.2017
(73) Proprietor: TDK Corporation, Tokyo 103-6128 (JP)
(72) Inventor: HIRANO, Hiroyuki, Tokyo 103-6128 (JP); FUKUOKA, Seiji, Tokyo 103-6128 (JP); SUZUKI, Keiji, Tokyo 103-6128 (JP); MORIYA, Takahiro, Tokyo 103-6128 (JP); NARITA, Kaoru, Tokyo 103-6128 (JP)
(74) Representative: Epping - Hermann - Fischer
(86) International application number: PCT/JP2015/052296
(87) International publication number: WO 2016/031261

(56) References cited:
- WO-A1-93/18369
- JP-A- H04 282 481
- JP-A- H05 175 483
- JP-A- S61 172 079
- JP-A- S61 172 079
- JP-A- 2000 193 407
- JP-A- 2002 005 613
- JP-A- 2008 101 932
- JP-A- 2010 243 287
- JP-U- S61 123 910
- US-A1- 2012 242 332

## Description

### TECHNICAL FIELD

The present invention relates to a magnetic position detection device using a magnetic detection element and utilized for a position sensor and a stroke sensor, for example.

### BACKGROUND ART

In conventionally known magnetic position detection devices, four spin-valve magnetic resistance elements are arranged at the same position with respect to a magnetic pole arrangement direction of magnetic members having N-poles and S-poles alternatively magnetized. From US 2012/0242332 A1 magnetic sensors are known. From JP S61 172079 A Hall sensors are known. From JP 2002 005613 A rotational angle detecting sensors are known. From JP 2010 243287 A shift position detection devices are known.

### PRIOR ART DOCUMENT

### Patent Document

Patent Document 1: Japanese Patent No. 5013146
Patent Document 2: Japanese Laid-Open Patent Publication No. 2006-23179

### SUMMARY OF THE INVENTION

A magnetic position detection device according to independent claim 1 is provided. Dependent claims provide preferred magnetic position detection devices. The term "embodiment" merely refers to further possible examples.

### Problem to Be Solved by the magnetic position detection device

Although conventional techniques require multiple magnets to be detected (object magnets), multiple object magnets cannot be arranged in some cases due to restriction on space. Using only one object magnetic leads to a problem of a narrow detectable stroke range. Additionally, objects to be detected are limited to magnets.

The present invention was conceived in view of the situations and it is therefore a first object of the present invention to provide a magnetic position detection device capable of preferable position detection even when only one object magnet is used.

A second object of the present invention is to provide a magnetic position detection device capable of preferable position detection even when an object to be detected is a soft magnetic body.

### Means for Solving the Problem

A first aspect is a magnetic position detection device. The magnetic position detection device comprises:
a bias magnet; an object magnet; and a magnetic detection element detecting a direction of an applied magnetic field, wherein
a movement of the object magnet relative to the bias magnet changes a magnetic field direction at a position of the magnetic detection element, and
when the bias magnet and the object magnet come closest to each other, a magnetic field generated by the object magnet is larger than a magnetic field generated by the bias magnet at the position of the magnetic detection element.

When the bias magnet is right in front of the object magnet, the same poles may face each other between the object magnet and the bias magnet.

A magnetic pole surface of the bias magnet facing toward the object magnet and a magnetic pole surface of the object magnet facing toward the bias magnet may be substantially parallel to, and the same in polarity as, each other and may be substantially parallel to a relative movement direction of the object magnet.

A magnetic pole surface of the bias magnet facing toward the object magnet and a magnetic pole surface of the object magnet facing toward the bias magnet may be substantially parallel to, and different in polarity from, each other and may be substantially parallel to a relative movement direction of the object magnet.

A magnetic pole surface of the bias magnet and a magnetic pole surface of the object magnet may be substantially parallel to each other and may be substantially perpendicular to a relative movement direction of the object magnet.

A magnetic pole surface of the bias magnet and a magnetic pole surface of the object magnet may be substantially perpendicular to each other.

A second aspect is a magnetic position detection device. The magnetic position detection device comprises:
a bias magnet;
an object magnet facing the bias magnet such that different poles face each other; and
a magnetic detection element detecting a direction of an applied magnetic field, wherein
a movement of the object magnet relative to the bias magnet changes a magnetic field direction at a position of the magnetic detection element.

A magnetic pole surface of the object magnet may have a length related to a direction of the relative movement longer than that of a magnetic pole surface of the bias magnet.

A position of the object magnet relative to the bias magnet may be uniquely identifiable.

The magnetic detection element may be located at a position coming closer to the object magnet than the bias magnet when the bias magnet is right in front of the object magnet.

The only one object magnet may be included.

A third embodiment is a magnetic position detection device . The magnetic position detection device comprises:
a bias magnet; a soft magnetic body; and a magnetic detection element detecting a direction of an applied magnetic field, wherein
a movement of the soft magnetic body relative to the bias magnet changes a magnetic field direction at a position of the magnetic detection element, and
a position of the soft magnetic body relative to the bias magnet is uniquely identifiable.

It is to be noted that any arbitrary combination of the above-described structural components as well as the expressions according to the present magnetic position detection device changed among a system and so forth are all effective as and encompassed by the present aspects.

### Effect of the magnetic position detection device

The first and second aspects can provide the magnetic position detection device capable of favorable position detection even when only one object magnet is used.

The third aspect can provide the magnetic position detection device capable of favorable position detection even when an object to be detected is a soft magnetic body.

### BRIEF DESCRIPTION OF DRAWING

Fig. 1 is a schematic configuration diagram of a magnetic position detection device according to a first embodiment.
Fig. 2 is a graph of an example of a relationship between a magnetic field direction (angle) at a position of a magnetic detection element 2 (detection position) and a movement amount of an object magnet 3, in the magnetic position detection device of Fig. 1.
Figs. 3A to 3C are explanatory views of changes in magnetic lines associated with movement of the object magnet 3 in the magnetic position detection device of Fig. 1.
Fig. 4 is a schematic configuration diagram of a magnetic position detection device according to a second embodiment.
Fig. 5 is a schematic configuration diagram of a magnetic position detection device according to a third embodiment.
Fig. 6 is a graph of an example of a relationship between a magnetic field direction (angle) at a position of the magnetic detection element 2 (detection position) and a movement amount of the object magnet 3, in the magnetic position detection device of Fig. 5.
Figs. 7A to 7F are explanatory views of changes in magnetic lines associated with movement of the object magnet 3 in the magnetic position detection device of Fig. 5.
Figs. 8A to 8H are explanatory views of changes in magnetic lines associated with movement of the object magnet 3 in a magnetic position detection device according to a fourth embodiment.
Fig. 9 is a graph of an example of a relationship between a magnetic field direction (angle) at a position of the magnetic detection element 2 (detection position) and a movement amount of the object magnet 3, in the magnetic position detection device of Figs. 8A to 8H.
Figs. 10A to 10G are explanatory views of changes in magnetic lines associated with movement of the object magnet 3 in a magnetic position detection device according to a fifth embodiment.
Figs. 11A to 11G are explanatory views of changes in magnetic lines associated with movement of the object magnet 3 in a magnetic position detection device according to a sixth embodiment.
Figs. 12A to 12C are explanatory views of changes in magnetic lines associated with movement of a soft magnet body 5 in a magnetic position detection device according to a seventh embodiment.
Fig. 13 is a graph of an example of a relationship between a magnetic field direction (angle) at a position of the magnetic detection element 2 (detection position) and a movement amount of the soft magnet body 5, in the magnetic position detection device of Figs. 12A to 12C.
Figs. 14A to 14C are explanatory views of changes in magnetic lines associated with movement of the soft magnetic body 5 in a magnetic position detection device according to an eighth embodiment.
Fig. 15 is a graph of an example of a relationship between a magnetic field direction (angle) at a position of the magnetic detection element 2 (detection position) and a movement amount of the soft magnetic body 5 in the magnetic position detection device of Figs. 14A to 14C.

### EMBODIMENT FOR CARRYING OUT THE MAGNETIC POSITION DETECTION DEVICE

Now, preferred embodiments of the present magnetic position detection device will be described in detail, referring to the drawings. The same or equivalent constituent elements, members and so on which are shown in the respective drawings are denoted with the same reference numerals, and overlapped descriptions are appropriately omitted. Moreover, the present magnetic position detection device is not limited to the embodiments, but the embodiments are only examples. All features and the combinations of the features which are described in the embodiments are not absolutely essential to the present magnetic position detection device.

### First Embodiment

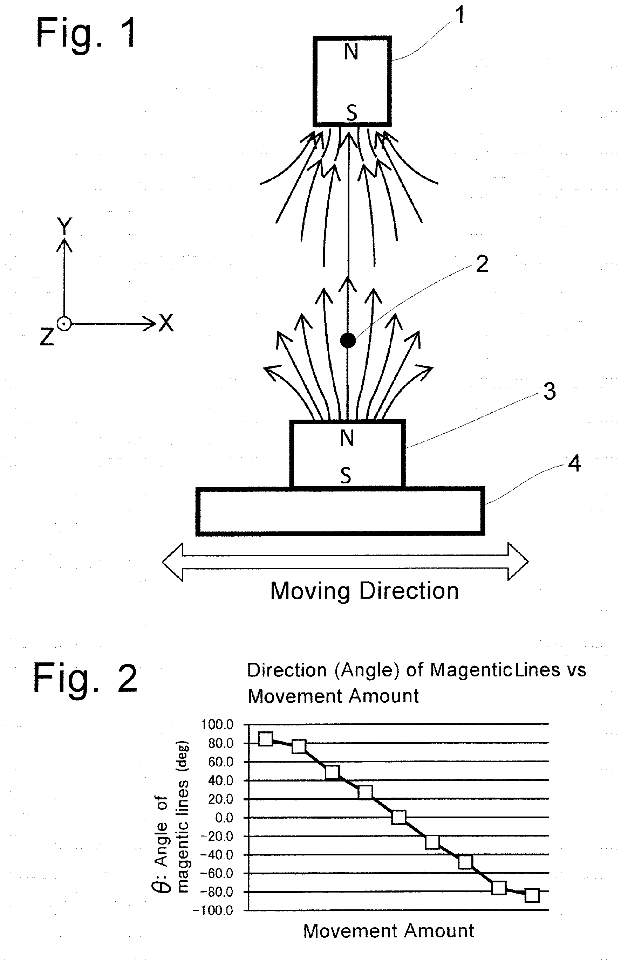

Fig. 1 is a schematic configuration diagram of a magnetic position detection device according to a first embodiment. In Fig. 1, X-direction, Y-direction, and Z-direction are defined as three orthogonal directions. Fig. 1 also shows a portion of magnetic lines generated by a bias magnet 1 and an object magnet 3. The magnetic position detection device of this embodiment includes the bias magnet 1, a magnetic detection element 2, the object magnet 3, and a mobile object 4.

The bias magnet 1 and the object magnet 3 are preferably rare-earth magnets such as neodymium magnets and are formed into a columnar shape or a prismatic shape, for example, and arranged such that different poles face each other. In the shown example, the S-pole surface of the bias magnet 1 and the N-pole surface of the object magnet 3 face each other. The facing magnetic pole surfaces of the bias magnet 1 and the object magnet 3 are both parallel to the XZ plane. The non-facing magnetic pole surfaces of the bias magnet 1 and the object magnet 3 are also both parallel to the XZ plane. Preferably, the facing magnetic pole surface of the object magnet 3 has a length related to a relative movement direction (X-direction, or X- and Y-directions) longer than that of the facing magnetic pole surface of the bias magnet 1. Preferably, the object magnet 3 has a more flattened shape than the bias magnet 1.

The magnetic detection element 2 is disposed in front of the S-pole surface of the bias magnet 1 (the facing magnetic pole surface toward the object magnet 3). The magnetic detection element 2 is fixedly disposed relative to the bias magnet 1 so as to fix a relative positional relationship with the bias magnet 1. The X-directional position of the magnetic detection element 2 is preferably identical to the X-directional position of the center of the bias magnet 1. The magnetic detection element 2 detects a direction of a magnetic field applied thereto and is implemented by, for example, a combination of multiple Hall elements and a magnetic yoke, or a combination of multiple spin-valve magnetic resistance elements (see Patent Document 1: Japanese Patent No. 5013146 as needed). Preferably, the magnetic detection element 2 is disposed at a position located closer to the object magnet 3 than the bias magnet 1 when the bias magnet 1 is right in front of the object magnet 3 (come closest to each other) as shown in Fig. 1. Preferably, the object magnet 3 has a magnetic force stronger than the bias magnet 1. In the case of the magnetic detection element 2 capable of detecting two-component detection (XY-component detection), the bias magnet 1, the magnetic detection element 2, and the object magnet 3 preferably have the centers at the Z-directional positions made identical to each other. The object magnet 3 is fixed to the mobile object 4 and moves in the X-direction as the mobile object 4 moves. On the other hand, in the case of the magnetic detection element 2 capable of detecting three-component detection (XYZ-component detection), a two-dimensional position of the object magnet 3 can be detected in the XZ plane, and the object magnet 3 may move in the XZ plane along with the mobile object 4. The movement of the object magnet 3 changes the magnetic field direction at the position of the magnetic detection element 2.

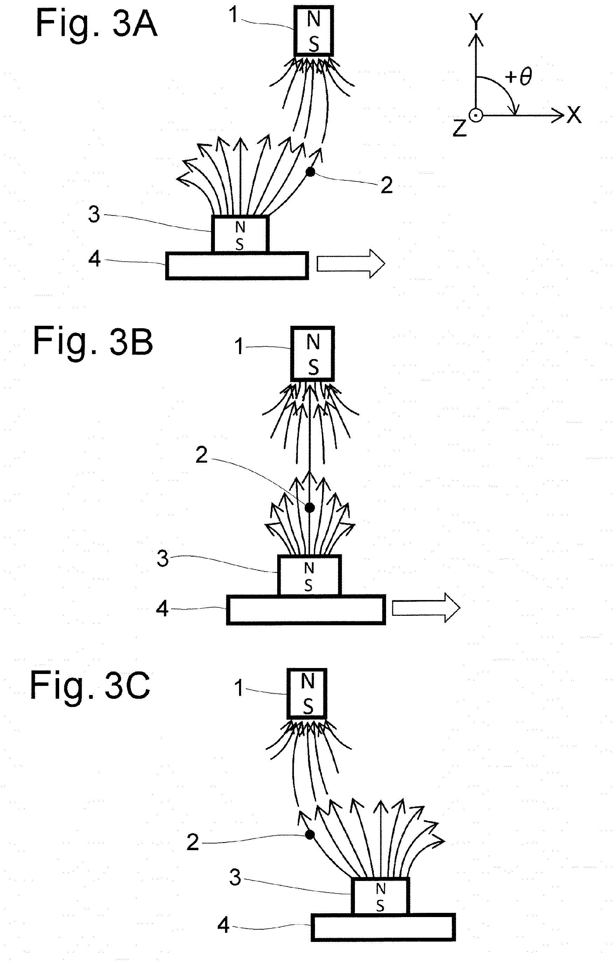

Fig. 2 is a graph of an example of a relationship between a magnetic field direction (angle) at a position of the magnetic detection element 2 (detection position) and a movement amount of the object magnet 3 in the magnetic position detection device of Fig. 1. In Fig. 2, an angle (θ) of the vertical axis is an angle in the clockwise direction starting from the +Y-direction. Figs. 3A to 3C are explanatory views of changes in magnetic lines associated with movement of the object magnet 3 in the magnetic position detection device of Fig. 1. Figs. 3A to 3C show a portion in the vicinity of the center of the stroke range of the object magnet 3 and, actually, as shown in Fig. 2, the magnetic field direction at the position of the magnetic detection element 2 changes in a range exceeding ±80 degrees. As shown in Figs. 3A to 3C, as the object magnet 3 and the mobile object 4 move rightward (in the +X-direction), the magnetic field rotates counterclockwise at the position of the magnetic detection element 2. Conversely, if the object magnet 3 and the mobile object 4 move leftward (in the -X-direction), the magnetic field rotates clockwise at the position of the magnetic detection element 2. In this way, a magnetic flux between the bias magnet 1 and the object magnet 3 has a vector changing like a pendulum at the bias magnet 1 as a supporting point in accordance with the movement of the object magnet 3 and the mobile object 4 in the ±X-directions. By detecting this vector change with the magnetic detection element 2, the position of the object magnet 3 and the mobile object 4 can be detected. As can be seen from Fig. 2, the magnetic field direction at the position of the magnetic detection element 2 changes in accordance with changes in the X-directional movement amount of the object magnet 3 and, since the X-directional movement amount of the object magnet 3 corresponds to the magnetic field direction (angle) in a one-to-one relationship, the movement amount (position) of the object magnet 3 and the mobile object 4 can be detected (uniquely identified) based on the output of the magnetic detection element 2 corresponding to the magnetic field direction.

This embodiment can produce the following effects.
(1) Since the bias magnet 1 is disposed behind the magnetic detection element 2, and the bias magnet 1 and the object magnet 3 are arranged such that different poles face each other, a detectable stroke range can be widened despite of the one object magnet 3. Therefore, even when a restriction on space exists making it unable to dispose the multiple object magnets 3, preferable position detection is enabled.
(2) Since the magnetic field at the position of the magnetic detection element 2 is strengthened by disposing the bias magnet 1, the magnetic field strength required for detection can be ensured even when the magnetic detection element 2 is more away from the object magnet 3 as compared to the case without the bias magnet 1, and a degree of freedom of layout is increased.
(3) Since the object magnet 3 is formed into a more flattened shape than the bias magnet 1 and the facing magnetic pole surface of the object magnet 3 has a length related to the movement direction made longer than that of the facing magnetic pole surface of the bias magnet 1, the magnetic flux of the object magnet 3 spreads in the X-direction and the bias magnet 1 strongly attracts the magnetic flux in the Y-direction in a narrow range. Since the magnetic detection element 2 is disposed at a position located closer to the object magnet 3 than the bias magnet 1 when the bias magnet 1 is right in front of the object magnet 3, the magnetic field rotating in accordance with the movement of the object magnet 3 can be acquired in a wide stroke range at the position of the magnetic detection element 2. Additionally, the object magnet 3 has a magnetic force stronger than the bias magnet 1, this also leads to a wider stroke range (the magnetic field direction can be changed by nearly 180 degrees at the position of the magnetic detection element 2 in accordance with the movement of the object magnet 3).

### Second Embodiment

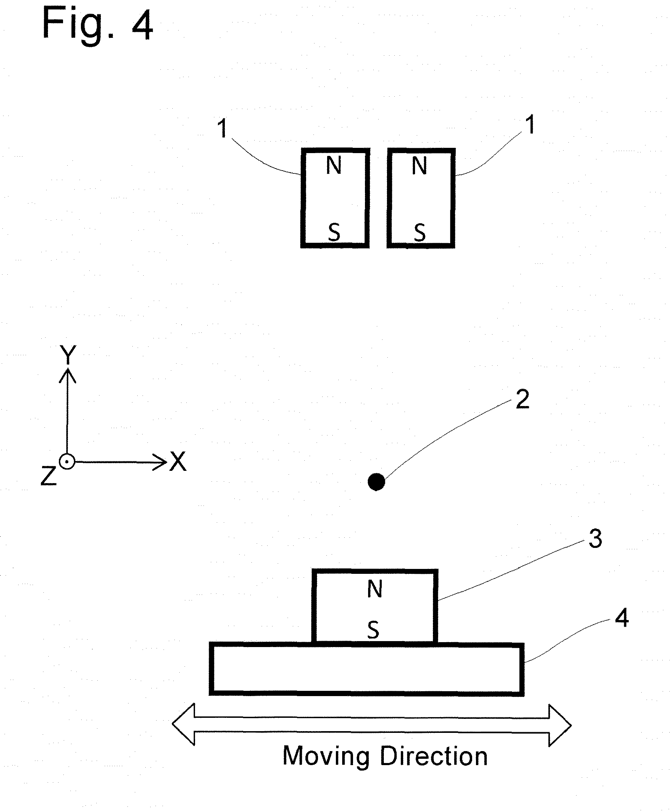

Fig. 4 is a schematic configuration diagram of a magnetic position detection device according to a second embodiment. The magnetic position detection device of this embodiment is different from the device of the first embodiment shown in Fig. 1 etc. in that the two bias magnets 1 are included. When the two bias magnets 1 are included, the X-direction position of the magnetic detection element 2 is made identical to the center of the gap between the bias magnets 1, and the other points are the same as the case shown in Fig. 1. This embodiment can produce the same effects as the first embodiment.

### Third Embodiment

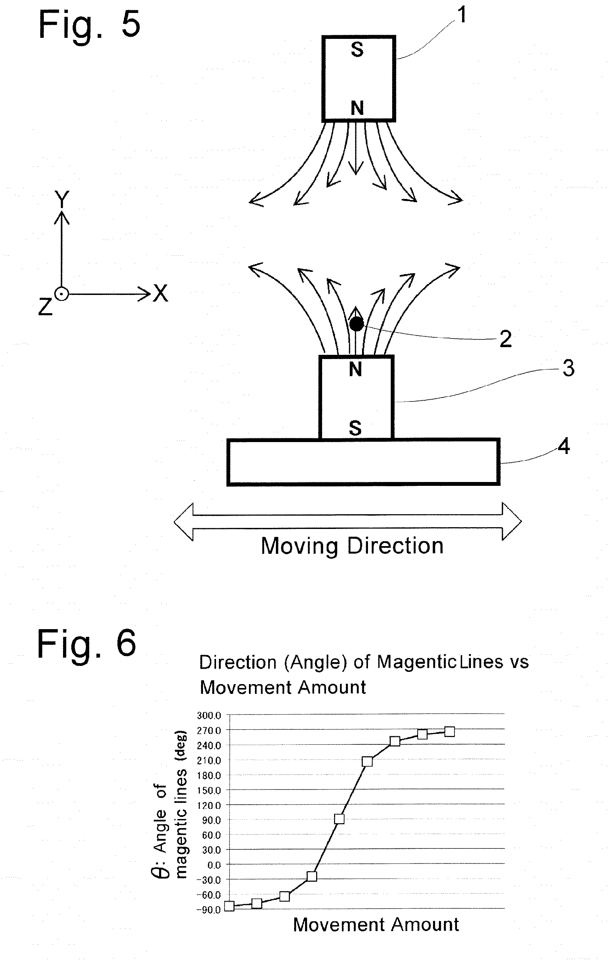

Fig. 5 is a schematic configuration diagram of a magnetic position detection device according to a third embodiment. In Fig. 5, X-direction, Y-direction, and Z-direction are three orthogonal directions defined in the same way as Fig. 1. Fig. 5 also shows a portion of magnetic lines generated by the bias magnet 1 and the object magnet 3. In the magnetic position detection device of this embodiment, unlike the device of the first embodiment shown in Fig. 1 etc., the bias magnet 1 and the object magnet 3 are arranged such that the same poles face each other. In the shown example, the N-pole surface of the bias magnet 1 and the N-pole surface of the object magnet 3 face each other. The facing magnetic pole surfaces of the bias magnet 1 and the object magnet 3 are both parallel to the XZ plane. The non-facing magnetic pole surfaces of the bias magnet 1 and the object magnet 3 are also both parallel to the XZ plane.

The magnetic detection element 2 is disposed in front of the N-pole surface of the bias magnet 1 (the facing magnetic pole surface toward the object magnet 3). The magnetic detection element 2 is fixedly disposed relative to the bias magnet 1 so as to fix a relative positional relationship with the bias magnet 1. The X-directional position of the magnetic detection element 2 is preferably identical to the X-directional position of the center of the bias magnet 1. Preferably, the magnetic detection element 2 is disposed at a position located closer to the object magnet 3 than the bias magnet 1 when the bias magnet 1 is right in front of the object magnet 3 (come closest to each other) as shown in Fig. 5. This is because when the bias magnet 1 is right in front of the object magnet 3, the magnetic field generated by the object magnet 3 is made larger than the magnetic field generated by the bias magnet 1 at the position of the magnetic detection element 2. As a result, when the bias magnet 1 is right in front of the object magnet 3, the magnetic field direction at the position of the magnetic detection element 2 can be directed in the +Y-direction (upward) and, as described later, the magnetic field direction can be rotated by approx. 360 degrees at the position of the magnetic detection element 2 in accordance with the movement of the object magnet 3. In the case of the magnetic detection element 2 capable of detecting two-component detection (XY-component detection), the bias magnet 1, the magnetic detection element 2, and the object magnet 3 preferably have the centers at the Z-directional positions made identical to each other. The object magnet 3 is fixed to the mobile object 4 and moves in the X-direction as the mobile object 4 moves. On the other hand, in the case of the magnetic detection element 2 capable of detecting three-component detection (XYZ-component detection), a two-dimensional position of the object magnet 3 can be detected in the XZ plane, and the object magnet 3 may move in the XZ plane along with the mobile object 4. The movement of the object magnet 3 changes the magnetic field direction at the position of the magnetic detection element 2.

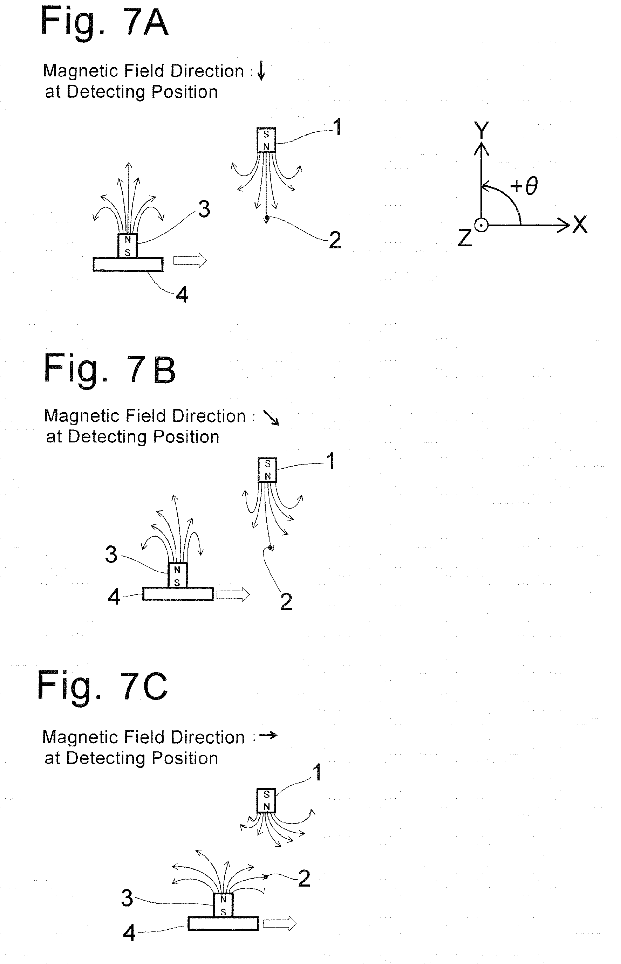

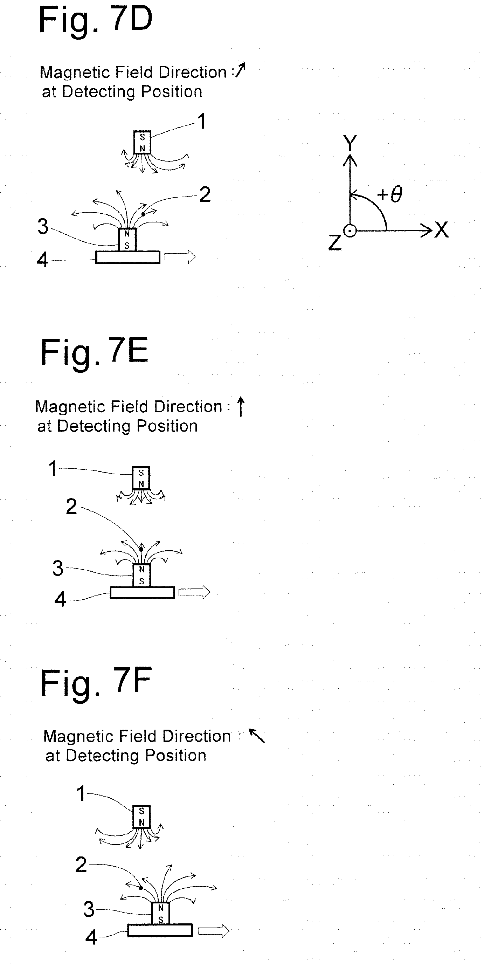

Fig. 6 is a graph of an example of a relationship between a magnetic field direction (angle) at a position of the magnetic detection element 2 (detection position) and a movement amount of the object magnet 3 in the magnetic position detection device of Fig. 5. In Fig. 6, an angle (θ) of the vertical axis is an angle in the counterclockwise direction starting from the +X-direction. Figs. 7A to 7F are explanatory views of changes in magnetic lines associated with movement of the object magnet 3 in the magnetic position detection device of Fig. 5. Figs. 7A to 7F show a portion of the stroke range of the object magnet 3 and, actually, as shown in Fig. 6, the magnetic field direction at the position of the magnetic detection element 2 is changed by approx. 360 degrees in accordance with relative movement of the object magnet 3. As shown in Figs. 7A to 7F, as the object magnet 3 and the mobile object 4 move rightward (in the +X-direction), the magnetic field rotates counterclockwise at the position of the magnetic detection element 2. Conversely, if the object magnet 3 and the mobile object 4 move leftward (in the -X-direction), the magnetic field rotates clockwise at the position of the magnetic detection element 2. In this way, a magnetic flux between the bias magnet 1 and the object magnet 3 has a vector changing in a rotating manner around the position of the magnetic detection element 2 in accordance with the movement of the object magnet 3 and the mobile object 4 in the ±X-directions. By detecting this vector change with the magnetic detection element 2, the position of the object magnet 3 and the mobile object 4 can be detected. As can be seen from Fig. 6, the magnetic field direction at the position of the magnetic detection element 2 changes in accordance with changes in the X-directional movement amount of the object magnet 3 and, since the X-directional movement amount of the object magnet 3 corresponds to the magnetic field direction (angle) in a one-to-one relationship, the movement amount (position) of the object magnet 3 and the mobile object 4 can be detected (uniquely identified) based on the output of the magnetic detection element 2 corresponding to the magnetic field direction.

According to this embodiment, since the magnetic field direction at the position of the magnetic detection element 2 is changed by approx. 360 degrees in accordance with the relative movement of the object magnet 3, a wider stroke range can be ensured as compared to the first embodiment in which the magnetic field direction is changed by 180 degrees or less.

### Fourth Embodiment

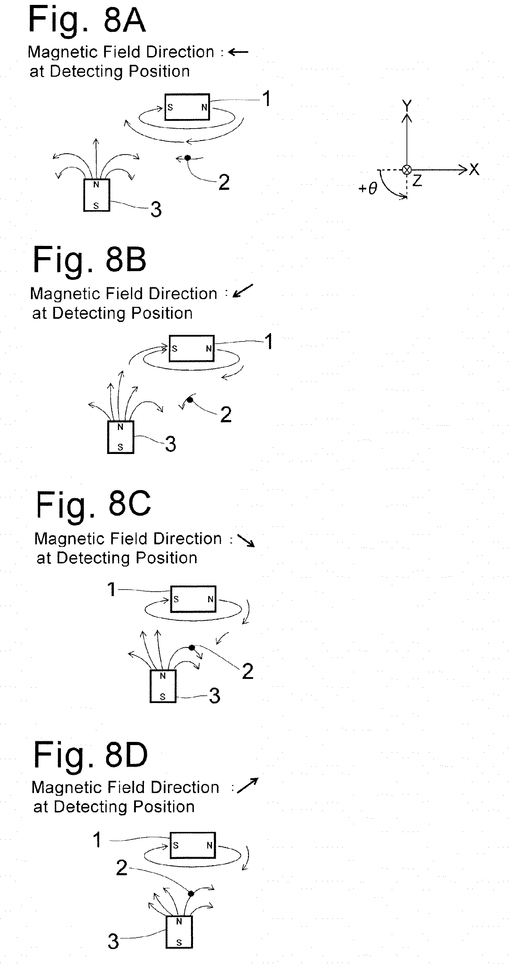

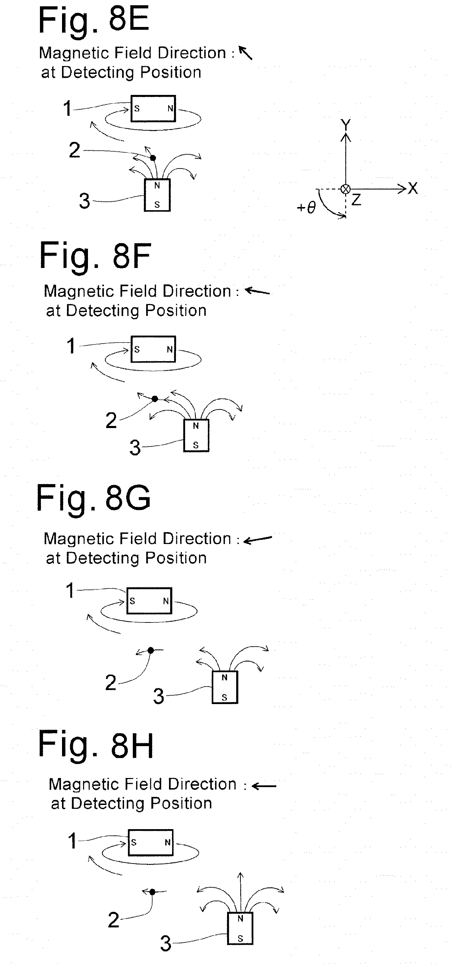

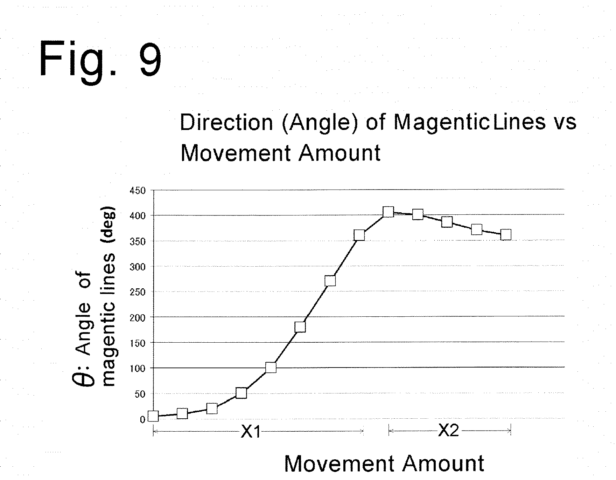

Figs. 8A to 8H are explanatory views of changes in magnetic lines associated with movement of the object magnet 3 in a magnetic position detection device according to a fourth embodiment. In Figs. 8A to 8H, a mobile object having the object magnet 3 fixed thereto and moving along with the object magnet 3 is not shown. Fig. 9 is a graph of an example of a relationship between a magnetic field direction (angle) at a position of the magnetic detection element 2 (detection position) and a movement amount of the object magnet 3 in the magnetic position detection device of Figs. 8A to 8H. In Fig. 9, an angle (θ) of the vertical axis is an angle in the counterclockwise direction starting from the -X-direction.

In the magnetic position detection device of this embodiment, unlike the device of the first embodiment shown in Fig. 1 etc., the magnetic pole surfaces of the bias magnet 1 and the magnetic pole surfaces of the object magnet 3 are perpendicular to each other. In this embodiment, the magnetic pole surfaces of the bias magnet 1 are parallel to the YZ plane, and the magnetic pole surfaces of the object magnet 3 are parallel to the XZ plane. The magnetic detection element 2 is disposed in front of a non-magnetic pole surface of the bias magnet 1 facing toward the object magnet 3. The magnetic detection element 2 is fixedly disposed relative to the bias magnet 1 so as to fix a relative positional relationship with the bias magnet 1. The X-directional position of the magnetic detection element 2 is preferably identical to the X-directional position of the center of the bias magnet 1. Preferably, the magnetic detection element 2 is disposed at a position located closer to the object magnet 3 than the bias magnet 1 when the bias magnet 1 is right in front of the object magnet 3 (come closest to each other) . In the case of the magnetic detection element 2 capable of detecting two-component detection (XY-component detection), the bias magnet 1, the magnetic detection element 2, and the object magnet 3 preferably have the centers at the Z-directional positions made identical to each other. On the other hand, in the case of the magnetic detection element 2 capable of detecting three-component detection (XYZ-component detection), a two-dimensional position of the object magnet 3 can be detected in the XZ plane, and the object magnet 3 may move in the XZ plane. The movement of the object magnet 3 changes the magnetic field direction at the position of the magnetic detection element 2.

In the range shown in Figs. 8A to 8E, as the object magnet 3 moves rightward (in the +X-direction), the magnetic field rotates counterclockwise at the position of the magnetic detection element 2. Conversely, if the object magnet 3 moves leftward (in the -X-direction) in the same range, the magnetic field rotates clockwise at the position of the magnetic detection element 2. In this way, a magnetic flux between the bias magnet 1 and the object magnet 3 has a vector changing in a rotating manner around the position of the magnetic detection element 2 in accordance with the movement of the object magnet 3 in the ±X-directions.

In the range shown in Figs. 8E to 8H, the magnetic field at the position of the magnetic detection element 2 has a vector changing like a pendulum in the vertical direction in Figs. 8E to 8H in a range within 180 degrees in accordance with the movement of the object magnet 3 in the ±X-directions.

By detecting these vector changes with the magnetic detection element 2, the position of the object magnet 3 can be detected. As shown in Fig. 9, since the magnetic field direction at the position of the magnetic detection element 2 is changed by approx. 400 degrees in the case of the relative movement of the object magnet 3 within the range shown in Figs. 8A to 8H, the stroke range of the object magnet 3 is limited to, for example, a range of X1 or a range of X2 shown in Fig. 9. As a result, since the X-directional movement amount of the object magnet 3 corresponds to the magnetic field direction (angle) in a one-to-one relationship, the movement amount (position) of the object magnet 3 can be detected (uniquely identified) based on the output of the magnetic detection element 2 corresponding to the magnetic field direction.

### Fifth Embodiment

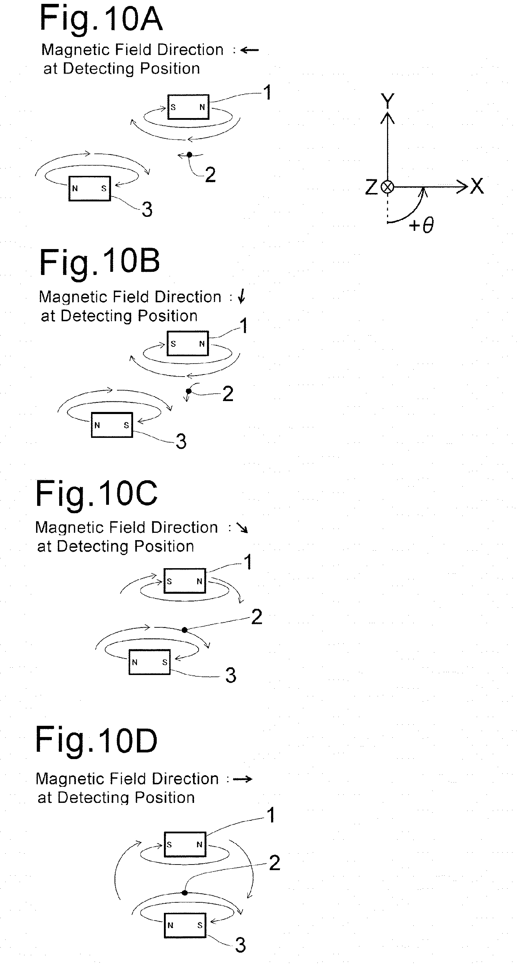

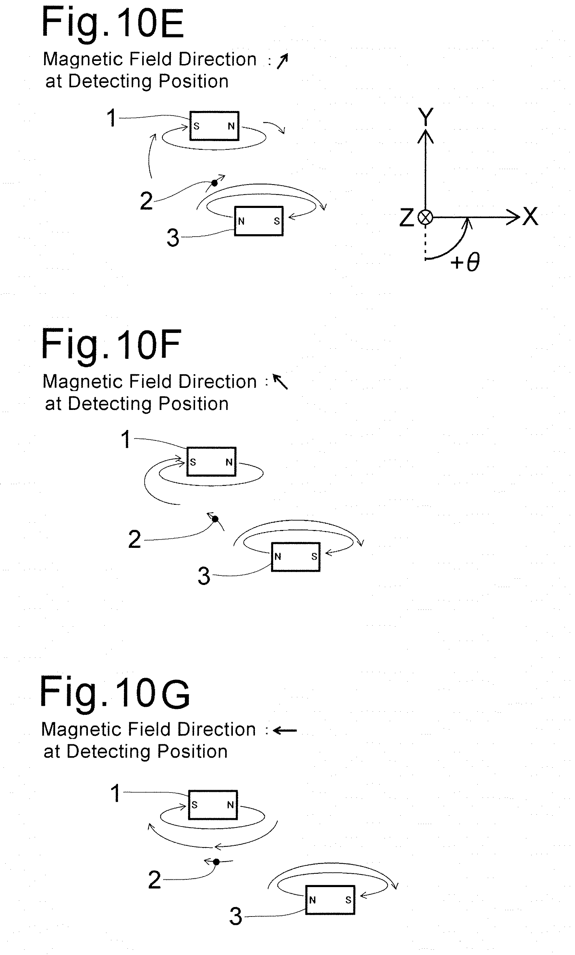

Figs. 10A to 10G are explanatory views of changes in magnetic lines associated with movement of the object magnet 3 in a magnetic position detection device according to a fifth embodiment. In Figs. 10A to 10G, a mobile object having the object magnet 3 fixed thereto and moving along with the object magnet 3 is not shown. In the magnetic position detection device of this embodiment, unlike the device of the first embodiment shown in Fig. 1 etc., the magnetic pole surfaces of the bias magnet 1 and the magnetic pole surfaces of the object magnet 3 are substantially parallel to each other and substantially perpendicular to the relative movement direction (X-direction) of the object magnet 3 (substantially parallel to the YZ plane) . The bias magnet 1 and the object magnet 3 are arranged such that the same poles face each other. Specifically, in the state of Figs. 10A and 10B, the S-poles face each other and, in the state of Figs. 10F and 10G, the N-poles face each other. The magnetic detection element 2 is disposed in front of a non-magnetic pole surface of the bias magnet 1 facing toward the object magnet 3. The magnetic detection element 2 is fixedly disposed relative to the bias magnet 1 so as to fix a relative positional relationship with the bias magnet 1. The X-directional position of the magnetic detection element 2 is preferably identical to the X-directional position of the center of the bias magnet 1. Preferably, the magnetic detection element 2 is disposed at a position located closer to the object magnet 3 than the bias magnet 1 when the bias magnet 1 is right in front of the object magnet 3 (come closest to each other) . This is because when the bias magnet 1 is right in front of the object magnet 3 as shown in Fig. 10D, the magnetic field generated by the object magnet 3 is made larger than the magnetic field generated by the bias magnet 1 at the position of the magnetic detection element 2. As a result, when the bias magnet 1 is right in front of the object magnet 3, the magnetic field direction at the position of the magnetic detection element 2 can be directed in the +X-direction (rightward) and the magnetic field direction can be rotated by approx. 360 degrees at the position of the magnetic detection element 2 in accordance with the movement of the object magnet 3. In the case of the magnetic detection element 2 capable of detecting two-component detection (XY-component detection), the bias magnet 1, the magnetic detection element 2, and the object magnet 3 preferably have the centers at the Z-directional positions made identical to each other. On the other hand, in the case of the magnetic detection element 2 capable of detecting three-component detection (XYZ-component detection), a two-dimensional position of the object magnet 3 can be detected in the XZ plane, and the object magnet 3 may move in the XZ plane. The movement of the object magnet 3 changes the magnetic field direction at the position of the magnetic detection element 2

As shown in Figs. 10A to 10G, as the object magnet 3 moves rightward (in the +X-direction), the magnetic field rotates counterclockwise at the position of the magnetic detection element 2. Conversely, if the object magnet 3 moves leftward (in the -X-direction) in the same range, the magnetic field rotates clockwise at the position of the magnetic detection element 2. In this way, a magnetic flux between the bias magnet 1 and the object magnet 3 has a vector changing in a rotating manner around the position of the magnetic detection element 2 in accordance with the movement of the object magnet 3 in the ±X-directions. By detecting this vector change with the magnetic detection element 2, the position of the object magnet 3 can be detected. The magnetic field direction at the position of the magnetic detection element 2 (the angle θ in the counterclockwise direction starting from the -Z-direction) is changed in accordance with the movement of the object magnet 3 as is the case with Fig. 6, and the movement amount (position) of the object magnet 3 can be detected (uniquely identified) based on the output of the magnetic detection element 2 corresponding to the magnetic field direction.

### Sixth Embodiment

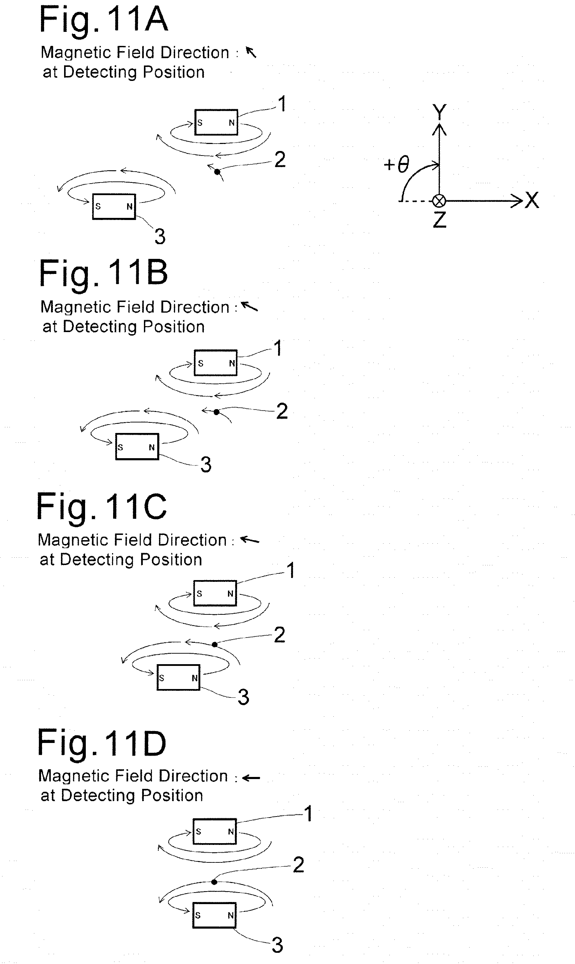

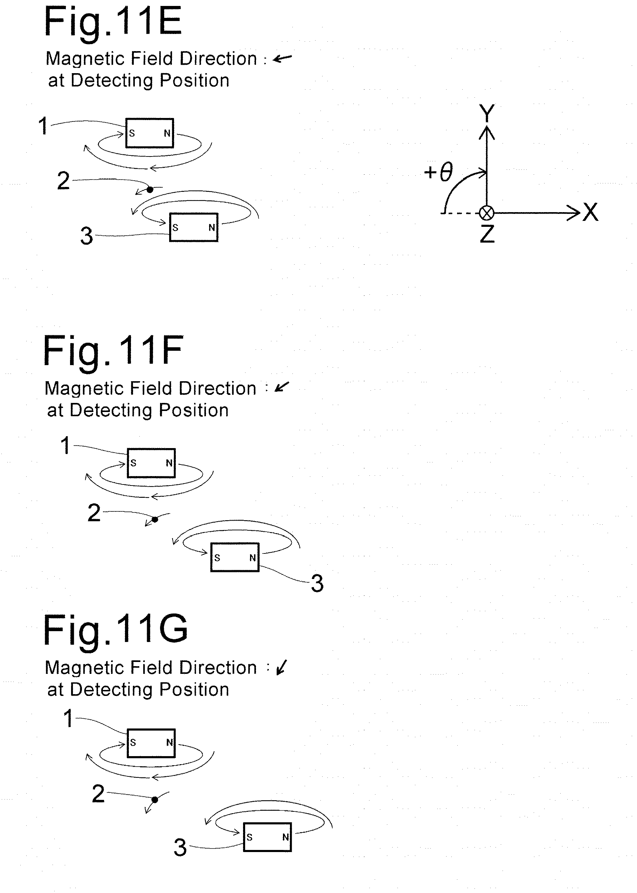

Figs. 11A to 11G are explanatory views of changes in magnetic lines associated with movement of the object magnet 3 in a magnetic position detection device according to a sixth embodiment. In Figs. 11A to 11G, a mobile object having the object magnet 3 fixed thereto and moving along with the object magnet 3 is not shown. As compared to the device of the fifth embodiment shown in Figs. 10A to 10G, the magnetic position detection device of this embodiment is different in that the N- and P-poles of the object magnet 3 are inverted, and is identical in terms of the other points. As shown in Figs. 11A to 11G, as the object magnet 3 moves rightward (in the +X-direction), the magnetic field rotates counterclockwise at the position of the magnetic detection element 2. Conversely, if the object magnet 3 moves leftward (in the -X-direction) in the same range, the magnetic field rotates clockwise at the position of the magnetic detection element 2. In this way, a magnetic flux between the bias magnet 1 and the object magnet 3 has a vector changing like a pendulum in accordance with the movement of the object magnet 3 in the ±X-directions. By detecting this vector change with the magnetic detection element 2, the position of the object magnet 3 can be detected. The magnetic field direction at the position of the magnetic detection element 2 (the angle θ in the counterclockwise direction starting from the -X-direction) is changed in accordance with the movement of the object magnet 3 as is the case with Fig. 2, and the movement amount (position) of the object magnet 3 can be detected (uniquely identified) based on the output of the magnetic detection element 2 corresponding to the magnetic field direction. Also in this embodiment, by using the object magnet 3 having a magnetic force stronger than the bias magnet 1, the stroke range can be widened (the magnetic field direction can be changed by nearly 180 degrees at the position of the magnetic detection element 2 in accordance with the movement of the object magnet 3).

### Seventh Embodiment

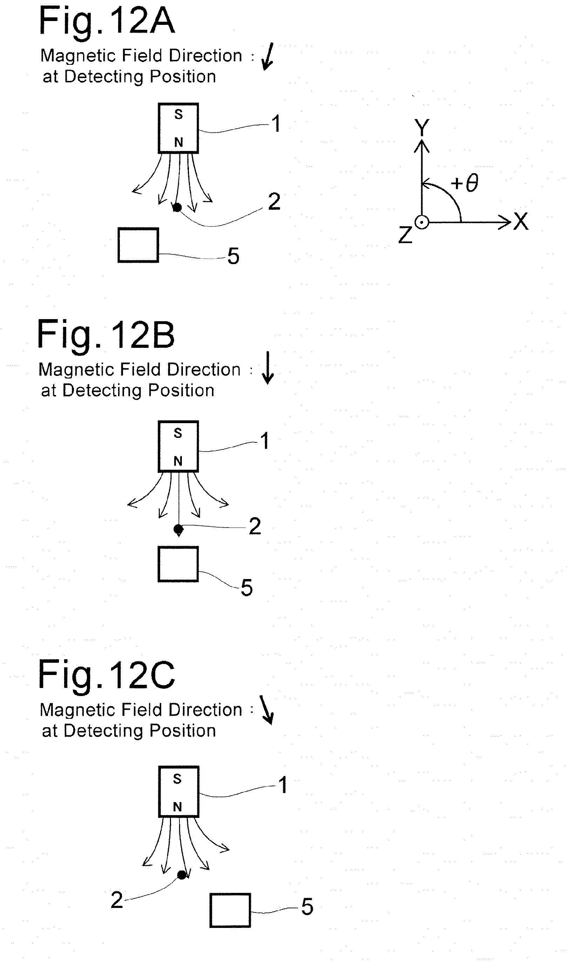

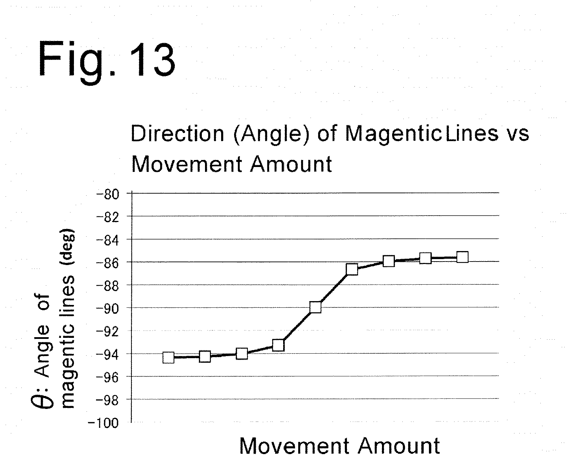

Figs. 12A to 12C are explanatory views of changes in magnetic lines associated with movement of a soft magnetic body 5 in a magnetic position detection device according to a seventh embodiment. Fig. 13 is a graph of an example of a relationship between a magnetic field direction (angle) at a position of the magnetic detection element 2 (detection position) and a movement amount of the soft magnetic body 5 in the magnetic position detection device of Figs. 12A to 12C. In Fig. 13, an angle (θ) of the vertical axis is an angle in the counterclockwise direction starting from the +X-direction. As compared to the device of the third embodiment shown in Fig. 5 etc., the magnetic position detection device of this embodiment is different in that the object magnet 3 is replaced with the soft magnetic body 5, and is identical in terms of the other points. The soft magnetic body 5 is fixed to a mobile object not shown and moves in the X-direction as the mobile object moves. As shown in Fig. 13, since the X-directional movement amount of the soft magnetic body 5 corresponds to the magnetic field direction (angle) in a one-to-one relationship, the movement amount (position) of the soft magnetic body 5 and the mobile object can be detected (uniquely identified) based on the output of the magnetic detection element 2 corresponding to the magnetic field direction. According to this embodiment, although the replacement of the object magnet 3 with the soft magnetic body 5 makes the angle variation of the magnetic field acquired at the position of the magnetic detection element 2 smaller so that the stroke range becomes smaller, preferable position detection is enabled even when the detection object is the soft magnetic body 5.

### Eighth Embodiment

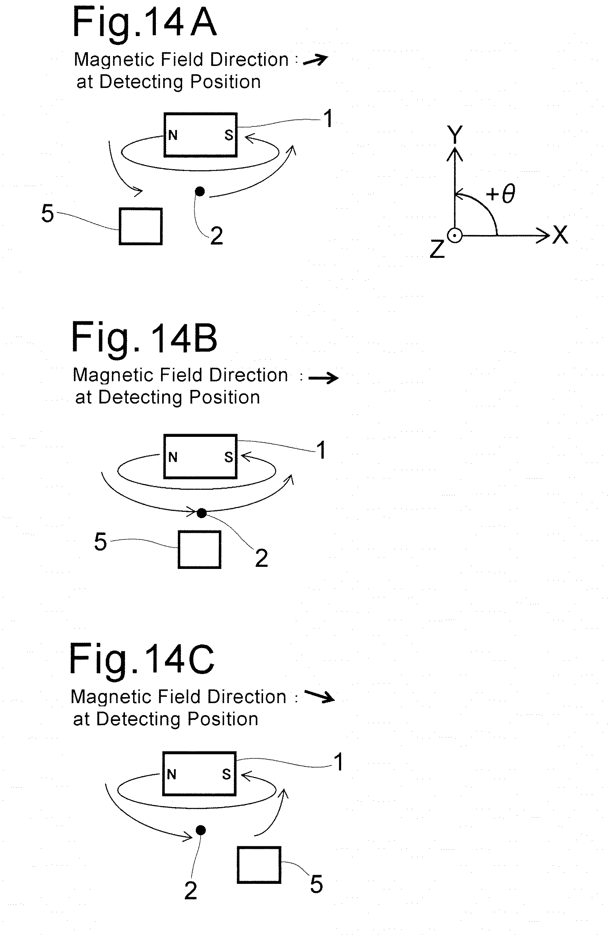

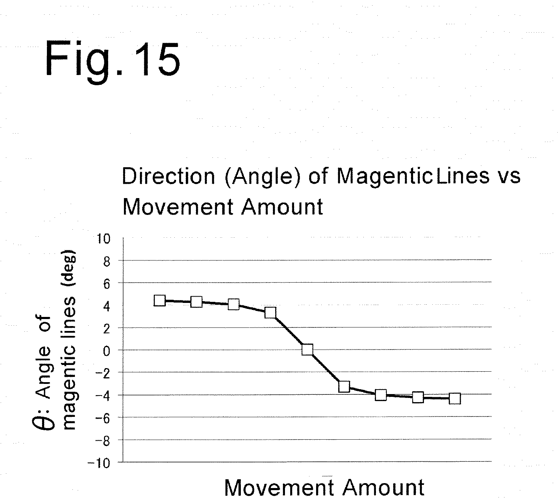

Figs. 14A to 14C are explanatory views of changes in magnetic lines associated with movement of the soft magnetic body 5 in a magnetic position detection device according to an eighth embodiment. Fig. 15 is a graph of an example of a relationship between a magnetic field direction (angle) at a position of the magnetic detection element 2 (detection position) and a movement amount of the soft magnetic body 5 in the magnetic position detection device of Figs. 14A to 14C. In Figs. 14A to 14C, an angle (θ) of the vertical axis is an angle in the counterclockwise direction starting from the +X-direction. As compared to the device of the seventh embodiment shown in Figs. 12A to 12C, the magnetic position detection device of this embodiment is different in that the direction of the bias magnet 1 is changed clockwise by 90 degrees, and is identical in terms of the other points. As shown in Fig. 15, since the X-directional movement amount of the soft magnetic body 5 corresponds to the magnetic field direction (angle) in a one-to-one relationship, the movement amount (position) of the soft magnetic body 5 and the mobile object can be detected (uniquely identified) based on the output of the magnetic detection element 2 corresponding to the magnetic field direction. This embodiment can produce the same effects as the seventh embodiment.

Although the present magnetic position detection device has been described by taking the embodiments as examples, it is understood by those skilled in the art that the constituent elements of the embodiments are variously modifiable within the scope of claims. Modification examples will hereinafter be mentioned.

The relative dimensional relationship between the bias magnet 1 and the object magnet 3 or the soft magnetic body 5 and the relative disposition of the magnetic detection element 2 are not limited to the examples described in the embodiments and are arbitrary as long as a magnetic field rotating in accordance with the movement of the object magnet 3 is acquired at the position of the magnetic detection element 2.

In the first to sixth embodiments, the object magnet 3 may be a ring-shaped magnet circling around the mobile object around the X-axis. In this case, in the first embodiment, the cross section acquired by cutting the object magnet 3 along the YZ plane may be more flattened shape than the same cross section of the bias magnet 1. Although the bias magnet 1 and the magnetic detection element 2 are fixed while the object magnet 3 or the soft magnetic body 5 moves in the description of the embodiments, the object magnet 3 or the soft magnetic body 5 may be fixed while the bias magnet 1 and the magnetic detection element 2 move. In other words, a set of the bias magnet 1 and the magnetic detection element 2, and the object magnet 3 or the soft magnetic body 5 may move relative to each other, and which one actually moves is arbitrary.

### EXPLANATIONS OF LETTERS OR NUMERALS

- 1: Bias magnet
- 2: Magnetic detection element
- 3: Object magnet
- 4: Mobile object
- 5: Soft magnetic body

## Claims

1. A magnetic position detection device comprising:
a bias magnet (1) producing a bias magnetic field having first and second magnetic pole surfaces which are parallel to each other and which have respective opposite single magnetic polarities;
an object magnet (3) spaced from the bias magnet, producing an object magnetic field and moving along a movement direction, wherein
the object magnet has first and second magnetic pole surfaces which are parallel to each other and which have respective opposite single magnetic polarities,
the second magnetic pole surface of the bias magnet faces the first magnetic pole surface of the object magnet,
the first and second magnetic pole surfaces of the bias magnet are parallel to the first and second magnetic pole surfaces of the object magnet and are parallel to the movement direction of the object magnet; and
a magnetic field detection element (2) to which the bias magnetic field produced by the bias magnet and the object magnetic field produced by the object magnet are applied, as an applied magnetic field, wherein
the magnetic field detection element is located between the second magnetic poled surface of the bias magnet and the first magnetic poled surface of the object magnet, is fixed in position relative to the bias magnet, and detects direction of the applied magnetic field,
movement of the object magnet in position relative to the bias magnet along the movement direction changes the direction of the applied magnetic field so that the direction of the applied magnetic field detected by the magnetic field detection element uniquely identifies the position of the object magnet along the movement direction, and
when, in the movement of the object magnet relative to the bias magnet, along the movement direction, the object magnet reaches a point that is closest to the bias magnet, the object magnetic field is larger at the magnetic field detection element than the bias magnetic field at the magnetic field detection element, and
when, in the movement of the object magnet relative to the bias magnet, along the movement direction, the object magnet is directly opposite the bias magnet, the magnetic field detection element is closer to the object magnet than to the bias magnet.

2. The magnetic position detection device according to claim 1, wherein the magnetic pole surface of the object magnet has a length along the movement direction of the object magnet that is longer than the length of the magnetic pole surface of the bias magnet.

3. The magnetic position detection device according to any one of claims 1 to 2, wherein the second magnetic pole surface of the bias magnet and the first magnetic pole surface of the object magnet have opposite single magnetic polarities.

4. The magnetic position detection device according to any one of claims 1 to 2, wherein the second magnetic pole surface of the bias magnet and the first magnetic pole surface of the object magnet have the same single magnetic polarities.

## Patentansprüche

1. Eine magnetische Positionserfassungsvorrichtung, umfassend:
einen Vormagnetisierungsmagneten (l), der ein Vormagnetisierungsmagnetfeld mit einer ersten und einer zweiten Magnetpolfläche erzeugt, die parallel zueinander verlaufen und die jeweils entgegengesetzte einzelne magnetische Polaritäten aufweisen;
einen Objektmagneten (3), der von dem Vormagnetisierungsmagneten beabstandet ist, ein Objektmagnetfeld erzeugt und sich entlang einer Bewegungsrichtung bewegt, wobei
der Objektmagnet eine erste und eine zweite Magnetpolfläche aufweist, die parallel zueinander verlaufen und jeweils entgegengesetzte einzelne magnetische Polaritäten haben,
die zweite Magnetpolfläche des Vormagnetisierungsmagneten der ersten Magnetpolfläche des Objektmagneten zugewandt ist,
die ersten und zweiten Magnetpolflächen des Vormagnetisierungsmagneten parallel zu den ersten und zweiten Magnetpolflächen des Objektmagneten sind und parallel zur Bewegungsrichtung des Objektmagneten sind; und
ein Magnetfelderfassungselement (2), an das das durch den Vormagnetisierungsmagneten erzeugte Vormagnetisierungsfeld und das durch den Objektmagneten erzeugte Objektmagnetfeld als ein angelegtes Magnetfeld angelegt werden, wobei das Magnetfelderfassungselement zwischen der zweiten magnetisch gepolten Oberfläche des Vormagnetisierungsmagneten und der ersten magnetisch gepolten Oberfläche des Objektmagneten angeordnet ist, in seiner Position relativ zum Vormagnetisierungsmagneten fixiert ist und die Richtung des angelegten Magnetfeldes erfasst,
eine Bewegung des Objektmagneten in seiner Position relativ zum Vormagnetisierungsmagneten entlang der Bewegungsrichtung die Richtung des angelegten Magnetfeldes ändert, so dass die Richtung des angelegten Magnetfeldes, die durch das Magnetfelderfassungselement erfasst wird, die Position des Objektmagneten entlang der Bewegungsrichtung eindeutig identifiziert, und
wenn bei der Bewegung des Objektmagneten relativ zum Vormagnetisierungsmagneten entlang der Bewegungsrichtung der Objektmagnet einen Punkt erreicht, der dem Vormagnetisierungsmagneten am nächsten liegt, ist das Objektmagnetfeld am Magnetfelderfassungselement größer als das Vormagnetisierungsfeld am Magnetfelderfassungselement, und wenn sich bei der Bewegung des Objektmagneten relativ zum Vormagnetisierungsmagneten entlang der Bewegungsrichtung der Objektmagnet direkt gegenüber dem Vormagnetisierungsmagneten befindet, ist das Magnetfelderfassungselement näher am Objektmagneten als am Vormagnetisierungsmagneten.

2. Magnetische Positionserfassungsvorrichtung nach Anspruch 1, wobei die Magnetpolfläche des Objektmagneten entlang der Bewegungsrichtung des Objektmagneten eine Länge aufweist, die länger als die Länge der Magnetpolfläche des Vormagnetisierungsmagneten ist.

3. Magnetische Positionserfassungsvorrichtung nach einem der Ansprüche 1 bis 2, wobei die zweite Magnetpolfläche des Vormagnetisierungsmagneten und die erste Magnetpolfläche des Objektmagneten entgegengesetzte einzelne magnetische Polaritäten haben.

4. die magnetische Positionserfassungsvorrichtung nach einem der Ansprüche 1 bis 2, wobei die zweite Magnetpolfläche des Vormagnetisierungsmagneten und die erste Magnetpolfläche des Objektmagneten die gleichen einzelnen magnetischen Polaritäten haben.

## Revendications

1. Dispositif de détection de position magnétique comprenant :
un aimant de polarisation (1) produisant un champ magnétique de polarisation, possédant des première et deuxième surfaces de pôle magnétique qui sont parallèles l'une à l'autre et qui ont des polarités magnétiques individuelles respectives opposées ;
un aimant objet (3) espacé de l'aimant de polarisation, produisant un champ magnétique objet et se déplaçant le long d'une direction de mouvement, dans lequel dispositif
l'aimant objet possède des première et deuxième surfaces de pôle magnétique qui sont parallèles l'une à l'autre et qui ont des polarités magnétiques individuelles respectives opposées,
la deuxième surface de pôle magnétique de l'aimant de polarisation fait face à la première surface de pôle magnétique de l'aimant objet,
les première et deuxième surfaces de pôle magnétique de l'aimant de polarisation sont parallèles aux première et deuxième surfaces de pôle magnétique de l'aimant objet et sont parallèles à la direction de mouvement de l'aimant objet ; et
un élément de détection de champ magnétique (2) auquel le champ magnétique de polarisation produit par l'aimant de polarisation et le champ magnétique objet produit par l'aimant objet sont appliqués, en tant que champ magnétique appliqué, dans lequel dispositif
l'élément de détection de champ magnétique est situé entre la deuxième surface de pôle magnétique de l'aimant de polarisation et la première surface de pôle magnétique de l'aimant objet, a une position fixe par rapport à l'aimant de polarisation, et détecte la direction du champ magnétique appliqué,
le mouvement de position de l'aimant objet par rapport à l'aimant de polarisation le long de la direction de mouvement modifie la direction du champ magnétique appliqué de telle façon que la direction du champ magnétique appliqué détecté par l'élément de détection de champ magnétique identifie de manière unique la position de l'aimant objet le long de la direction de mouvement, et
lorsque, dans le mouvement de l'aimant objet par rapport à l'aimant de polarisation, le long de la direction de mouvement, l'aimant objet atteint un point qui est le plus proche de l'aimant de polarisation, le champ magnétique objet est supérieur, au niveau de l'élément de détection de champ magnétique, au champ magnétique de polarisation au niveau de l'élément de détection de champ magnétique, et
lorsque, dans le mouvement de l'aimant objet par rapport à l'aimant de polarisation, le long de la direction de mouvement, l'aimant objet est opposé directement à l'aimant de polarisation, l'élément de détection de champ magnétique est plus proche de l'aimant objet que de l'aimant de polarisation.

2. Dispositif de détection de position magnétique selon la revendication 1, dans lequel la surface de pôle magnétique de l'aimant objet a une longueur dans la direction de mouvement de l'aimant objet qui est supérieure à la longueur de la surface de pôle magnétique de l'aimant de polarisation.

3. Dispositif de détection de position magnétique selon l'une quelconque des revendications 1 et 2, dans lequel la deuxième surface de pôle magnétique de l'aimant de polarisation et la première surface de pôle magnétique de l'aimant objet ont des polarités magnétiques individuelles opposées.

4. Dispositif de détection de position magnétique selon l'une quelconque des revendications 1 et 2, dans lequel la deuxième surface de pôle magnétique de l'aimant de polarisation et la première surface de pôle magnétique de l'aimant objet ont les mêmes polarités magnétiques individuelles.
